# EUROPEAN PATENT SPECIFICATION

(11) **EP 3 136 206 B1**
(45) Date of publication and mention of the grant of the patent: **29.08.2018**
(21) Application number: 16159116.9
(22) Date of filing: 08.03.2016
(51) Int. Cl.: G06F 3/044, G06F 3/041

(54) **METHOD AND APPARATUS FOR SETTING THRESHOLD**
VERFAHREN UND VORRICHTUNG ZUR SCHWELLENEINSTELLUNG
PROCÉDÉ ET APPAREIL DE RÉGLAGE DE SEUIL

(30) Priority: 31.08.2015 CN 201510549404
(43) Date of publication of application: 01.03.2017
(73) Proprietor: Xiaomi Inc., Beijing 100085 (CN)
(72) Inventor: LI, Guosheng, 100085 Haidian District (CN); YANG, Kun, 100085 Haidian District (CN); JIANG, Zhongsheng, 100085 Haidian District (CN)
(74) Representative: Sadler, Peter Frederick

(56) References cited:
- US-A1- 2009 219 175
- US-A1- 2012 072 044
- US-A1- 2012 313 767
- US-A1- 2013 222 291
- US-A1- 2013 328 828

## Description

### TECHNICAL FIELD

The present disclosure generally relates to the field of touch screens, and more particularly, to a method and an apparatus for setting a threshold.

### BACKGROUND

Typically, a touch screen and a touch IC (integrated circuit) are disposed in an electronic device.

When a trigger signal is generated by touching the touch screen with a finger of a user, the touch IC may detect whether the signal strength of the trigger signal reaches a reporting threshold. If the signal strength of the trigger signal reaches the reporting threshold, the touch IC reports the touch trigger event to a processor. The reporting threshold may be a sensitivity of the touch screen. If the sensitivity is too low, the touch screen responds slowly. If the sensitivity is too high, incorrect operations may occur.

However, in winter, when the user is wearing gloves and uses the touch screen, the reporting threshold is required to be reset. In the related art, a glove mode option is provided, in which there are three options for different thicknesses of gloves: thin, middle, thick. Each option corresponds to a reporting threshold. By setting by the user manually, the reporting threshold may be set to a reasonable value.

US patent application US 2012/0313767 describes a touch sensor assembly having a selectable sensitivity level that allows for a user to activate a touch sensor while wearing gloves. The touch sensor has a selectable sensitivity level, and detects a value corresponding to a capacitance of the touch sensor. Activation of the touch sensor is determined if the detected value exceeds a predetermined value, which may be varied based upon environmental temperature. US patent application US 2013/0222291 describes a touchscreen for an electronic device that includes a number of temperature sensors. The temperature sensors sense temperatures of positions on the input surface and output corresponding sensing signals to a processor, which determines whether the input surface is touched based on the sensing signals. US patent application US 2012/0072044 describes a user device having a temperature sensitive touchscreen comprising multiple thermocouples. The user device can auto-bias a temperature of a temperature sensitive user interface in order to better assure proper operation of the temperature sensitive user interface in all operating conditions. US patent application US 2009/0219175 describes an input device that includes an input-sensing unit that contains a capacitive input sensor and a sensitivity-sensing unit that contains a capacitive sensitivity sensor. The input-sensing unit senses position information obtained by touch operation of an operation body to the capacitive input sensor. The sensitivity-sensing unit senses sensitivity information obtained by touch operation of the operation body to the capacitive sensitivity sensor. The input device includes a control unit that determines whether or not the output level of the position information from the input-sensing unit is adjusted based on the sensitivity information sensed by the sensitivity-sensing unit and a sensitivity-adjusting unit that adjusts an output level of the position information from the input-sensing unit based on a result of the determination of the control unit. The control unit controls the sensitivity-adjusting unit to adjust the output level of the position information received from the input-sensing unit. US 2013/0328828 A1 discloses a method for glove touch detection that uses several thresholds for distinguishing gloved hand touches from hovering bare hand touches, and bare hand contact touches.

### SUMMARY

The present disclosure provides a method and an apparatus for setting a threshold, which include the following technical solutions.

According to a first aspect of embodiments of the present disclosure, there is provided a method for setting a threshold, including features of claim 1.

Querying a reporting threshold corresponding to the ambient temperature, includes:
querying a temperature range to which the ambient temperature belongs; and
querying a reporting threshold corresponding to the temperature range from a predetermined correspondence, in which the predetermined correspondence is a correspondence between a plurality of temperature ranges and reporting thresholds, the temperature ranges corresponding respectively to various thicknesses of gloves likely to be worn and the reporting thresholds being derived according to the thickness of glove used by a user in the temperature range.

Optionally, acquiring an ambient temperature of an electronic device, includes:
acquiring the ambient temperature by a temperature sensor disposed in the electronic device;
   or
acquiring a geographical position of the electronic device, and acquiring a temperature corresponding to the geographical position from a server as the ambient temperature.

Optionally, setting the reporting threshold queried as a reporting threshold of a touch screen in the electronic device, includes:
sending a setting instruction to a touch integrated circuit by a processor of the electronic device if the reporting threshold is queried by the processor, in which the setting instruction is configured to instruct the touch integrated circuit to set the reporting threshold queried as the reporting threshold of the touch screen;
   or
setting the reporting threshold queried as the reporting threshold of the touch screen by the a touch integrated circuit if the reporting threshold is queried by the touch control integrity circuit.

Optionally, the method further includes:
detecting whether a glove touch mode is started; and
performing an act of acquiring the ambient temperature of the electronic device, if the glove touch mode is started.

According to a second aspect of embodiments of the present disclosure, there is provided an apparatus for setting a threshold, including features of claim 7.

The querying module includes:
a temperature querying sub-module, configured to query a temperature range to which the ambient temperature belongs; and
a reporting threshold querying sub-module, configured to query a reporting threshold corresponding to the temperature range from a predetermined correspondence, in which the predetermined correspondence is a correspondence between a plurality of temperature ranges and reporting thresholds, the temperature ranges corresponding respectively to various thicknesses of gloves likely to be worn and the reporting thresholds being derived according to the thickness of glove used by a user in the temperature range.

Optionally, the acquiring module includes a first temperature acquiring sub-module or includes a geographical position acquiring sub-module and a second temperature acquiring sub-module; in which
the first temperature acquiring sub-module is configured to acquire the ambient temperature by a temperature sensor disposed in the electronic device;
the geographical position acquiring sub-module is configured to acquire a geographical position of the electronic device; and
the second temperature acquiring sub-module is configured to acquire a temperature corresponding to the geographical position from a server as the ambient temperature.

Optionally, the setting module is configured to send a setting instruction to a touch integrated circuit by a processor of the electronic device if the reporting threshold is queried by the processor, in which the setting instruction is configured to instruct the touch integrated circuit to set the reporting threshold queried as the reporting threshold of the touch screen;
or
the setting module is configured to set the reporting threshold queried as the reporting threshold of the touch screen by the a touch integrated circuit if the reporting threshold is queried by the touch integrated circuit.

Optionally, the apparatus further includes:
a detecting module, configured to detect whether a glove touch mode is started; in which
the acquiring module is further configured to perform an act of acquiring the ambient temperature of the electronic device, if the glove touch mode is started.

According to a third aspect of embodiments of the present disclosure, there is provided a device for setting a threshold, including:
a processor; and
a memory for storing instructions executable by the processor;
in which the processor is configured to carry out the method according to the first aspect.

According to a fourth aspect of embodiments of the present disclosure, there is provided a non-transitory computer-readable storage medium having stored therein instructions that, when executed by a processor of a device, causes the device to perform the method for setting a threshold according to the first aspect of embodiments of the present disclosure.

The technical solutions provided in embodiments of the present disclosure may have following beneficial effects.

By acquiring the ambient temperature of the electronic device, querying the reporting threshold corresponding to the ambient temperature, and setting the reporting threshold acquired as the reporting threshold of the touch screen in the electronic device, several problems in the related art are solved. In particular, in the related art the reporting threshold is required to be set by the user manually, the setting operations are complex, there are fewer options for the reporting threshold and the adaptability to the thickness of glove is limited. These problems are solved by embodiments of the present invention, and the effect of automatically setting the reporting threshold of the touch screen to a reasonable value according to the ambient temperature, reducing the operations set by the user and widely adapting to the thickness of glove may be achieved.

It is to be understood that both the foregoing general description and the following detailed description are merely exemplary and explanatory, and not intended to limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for setting a threshold according to an example embodiment.
Fig. 2A is a flow chart showing a method for setting a threshold according to another example embodiment.
Fig. 2B is a flow chart showing a method for setting a threshold according to another example embodiment.
Fig. 2C is a flow chart showing a method for setting a threshold according to another example embodiment.
Fig. 2D is a flow chart showing a method for setting a threshold according to yet another example embodiment.
Fig. 3 is a flow chart showing a method for setting a threshold according to further another example embodiment.
Fig. 4 is a block diagram of an apparatus for setting a threshold according to an example embodiment.
Fig. 5 is a block diagram of an apparatus for setting a threshold according to another example embodiment.
Fig. 6 is a block diagram of an apparatus for setting a threshold according to another example embodiment.
Fig. 7 is a block diagram of an apparatus for setting a threshold according to yet another example embodiment.
Fig. 8 is a block diagram of an apparatus for setting a threshold according to further another example embodiment.
Fig. 9 is a block diagram of a device for setting a threshold according to an example embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The method for setting a threshold provided in embodiments of the present disclosure is applicable to an electronic device having a touch screen. The electronic device may be a mobile phone, a panel computer or tablet, an electronic book reader, an MP3 (Moving Picture Experts Group Audio Layer III) player, an MP4 (Moving Picture Experts Group Audio Layer IV) player, a laptop portable computer and a desk-top computer, etc.

The electronic device may be provided with a temperature sensor or a position locating component.

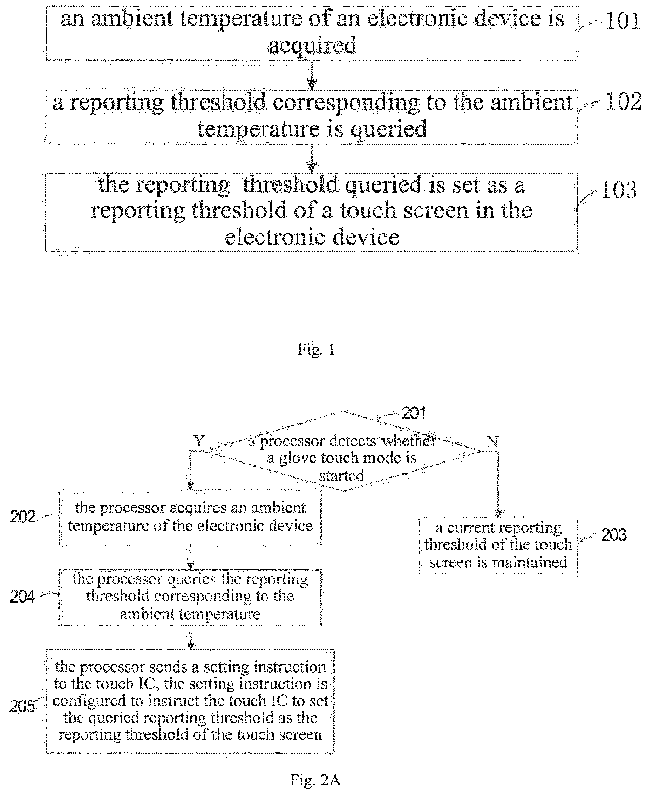

Fig. 1 is a flow chart showing a method for setting a threshold according to an example embodiment. As shown in Fig. 1, the method for setting a threshold includes the following steps.

In step 101, an ambient temperature of the electronic device is acquired.

In step 102, a reporting threshold corresponding to the ambient temperature is queried.

In step 103, the reporting threshold queried is set as a reporting threshold of a touch screen in the electronic device.

In conclusion, with the method for setting a threshold, by acquiring the ambient temperature of the electronic device, querying the reporting threshold corresponding to the ambient temperature, and setting the reporting threshold acquired as the reporting threshold of the touch screen in the electronic device, the problem in the related art that the reporting threshold is required to be set by the user manually, the operations are complex, there is less option for the threshold and the adaptability to the thickness of glove is limited is solved, and the effect of automatically setting the reporting threshold of the touch screen to a reasonable value according to the ambient temperature, reducing the operations set by the user and widely adapting to the thickness of glove may be achieved.

Fig. 2A is a flow chart showing a method for setting a threshold according to another example embodiment. As shown in Fig. 2A, the method for setting a threshold includes following steps.

In step 201, a processor detects whether a glove touch mode is started by the electronic device.

If the glove touch mode is started, step 202 is executed. If the glove touch mode is not started, step 203 is executed.

A capacitive touch screen technology is realized by a current induction of the human. When a finger contacts with the touch screen, a coupling capacity is formed between the finger and the capacitive touch screen since the human is grounded, and the coupling capacity may absorb some current from the contact. If the total current flowing through the contact reaches some value (i.e., the reporting threshold), the processor or the touch IC in the electronic device may calculate accurately the position of the contact according to a ratio and strength of the current flowing through respective electrode, and make a response to an operation issued by the finger.

In order to avoid incorrect operations, typically, the reporting threshold of the touch screen is set to a high value. The higher the reporting threshold is, the lower the sensitivity to an operation the touch screen is. When a human wearing gloves performs an operation on an electronic device having a touch screen (such as, a mobile phone) in winter, due to the gloves, the distance between the finger and the touch screen is increased and the contact area between the finger and the touch screen is reduced, such that the capacitance of the coupling capacity is small and the signal of current flowing through the contact is weak. If the strength of the signal of current flowing through the contact is below the reporting threshold, the touch screen cannot respond to the operation issued by the human wearing gloves, thus the glove mode is required to be started to improve the sensitivity of the touch screen.

It should be noted that, step 201 is optional.

In step 202, the processor acquires an ambient temperature of the electronic device.

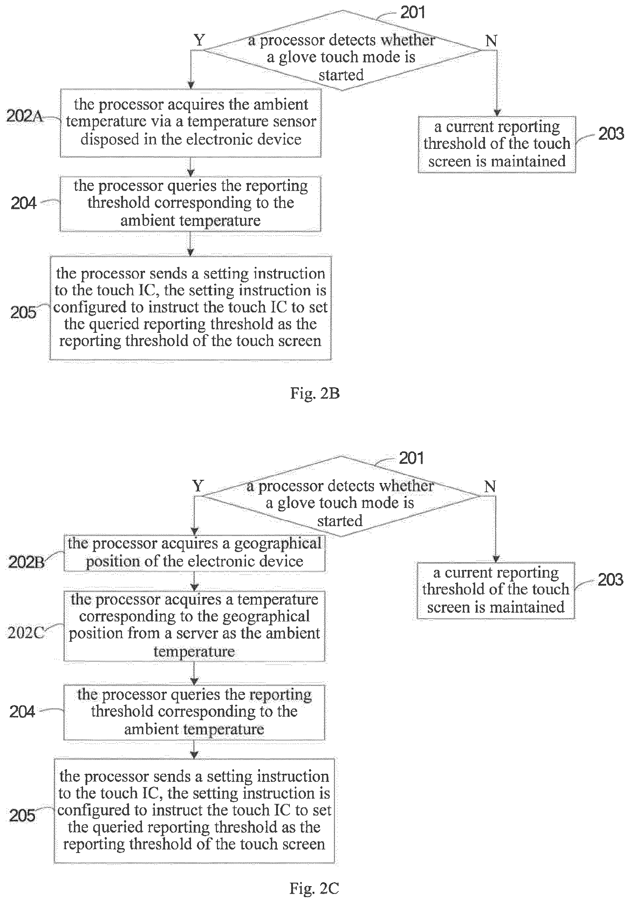

Alternatively, as shown in Fig. 2B, step 202 may be replaced with step S202A.

In step 202A, the processor acquires the ambient temperature via a temperature sensor disposed in the electronic device.

That is, the processor acquires the ambient temperature directly via the temperature sensor disposed in the electronic device.

Alternatively, as shown in Fig. 2C, step 202 may be replaced with sub-steps 202B and 202C.

In step 202B, the processor acquires a geographical position of the electronic device.

The method of acquiring the geographical position of the electronic device includes: acquiring the geographical position of the electronic device by locating the electronic device with the Global Positioning System disposed in the electronic device.

In step 202C, the processor acquires a temperature corresponding to the geographical position from a server as the ambient temperature.

The server may be a server providing real-time temperature in a respective area, such as a background server applied for weather forecast.

In step 203, a current reporting threshold of the touch screen is maintained.

In step 204, the processor queries the reporting threshold corresponding to the ambient temperature.

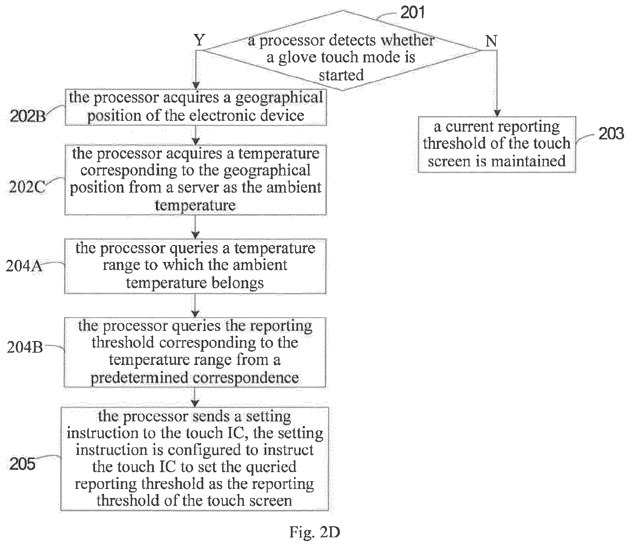

Alternatively, as shown in Fig. 2D, step 204 includes sub-steps 204A and 204B.

In step 204A, the processor queries a temperature range to which the ambient temperature belongs.

The processor queries the temperature range to which the acquired ambient temperature belongs, and may conclude the thickness range of gloves used by the user according to the temperature range.

In step 204B, the processor queries the reporting threshold corresponding to the temperature range from a predetermined correspondence.

The predetermined correspondence may be a correspondence between at least one temperature range and the reporting threshold.

The processor pre-stores a correspondence between a temperature range and a threshold. Since various temperature ranges correspond respectively to various thicknesses of gloves likely to be worn, various temperature ranges correspond respectively to various reporting thresholds. Each reporting threshold may be derived according to the thickness of glove used by the user in some temperature range, and the derivation may be performed by the developer via experiments in advance.

The correspondence may represent that one temperature range corresponds to a given predetermined reporting threshold. Alternatively, many temperature ranges may correspond to one reporting threshold. The presorted correspondence between the temperature range and the reporting threshold may be indicated as follows.

**Table 1**

| temperature range | reporting threshold |
|---|---|
| -20°C∼-11°C | A |
| -10°C∼-1°C | B |
| 0°C∼10°C | C |
| 11°C∼20°C | D |

In step 205, the processor sends a setting instruction to the touch IC, the setting instruction is configured to instruct the touch IC to set the queried reporting threshold as the reporting threshold of the touch screen.

For example, if the current temperature is 2°C, the processor queries the reporting threshold C, and sends the setting instruction to the touch IC, the setting instruction is configured to instruct the touch IC to set the current reporting threshold to the reporting threshold C.

In conclusion, with the method for setting a threshold, by acquiring the ambient temperature of the electronic device, querying the reporting threshold corresponding to the ambient temperature, and setting the reporting threshold acquired by the querying as the reporting threshold of the touch screen in the electronic device, the problem in the related art that the threshold is required to be set by the user manually, the operations are complex, there is less option for the threshold and the adaptability to the thickness of glove is limited is solved, and the effect of automatically setting the reporting threshold of the touch screen to a reasonable value according to the ambient temperature, reducing the operations set by the user and widely adapting to the thickness of glove may be achieved.

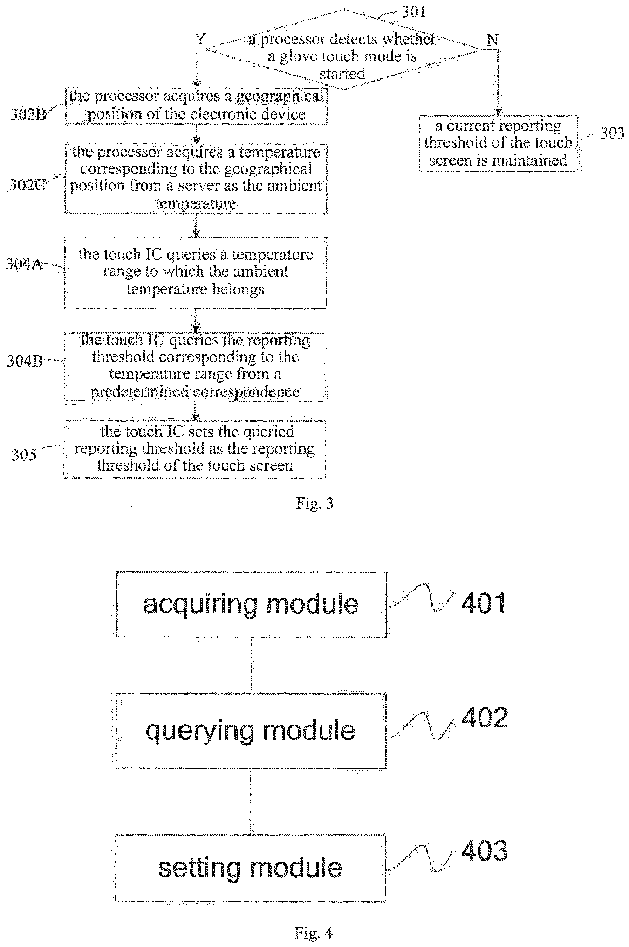

Fig. 3 is a flow chart showing a method for setting a threshold according to yet another example embodiment. As shown in Fig. 3, the method includes the following steps.

In step 301, a processor detects whether a glove touch mode is started by the electronic device.

If the glove touch mode is started, step 302 is executed. If the glove touch mode is not started, step 303 is executed.

A capacitive touch screen technology is realized by a current induction of human. When a finger contacts with the touch screen, a coupling capacity is formed between the finger and the capacitive touch screen since the human is grounded, and the coupling capacity may absorb some current from the contact. If the total current flowing through the contact reaches some value (i.e., the reporting threshold), the processor or the touch IC in the electronic device may calculate accurately the position of the contact according to a ratio and strength of the current flowing through respective electrode, and make a response to an operation issued by the finger.

In order to avoid incorrect operations, typically, the reporting threshold of the touch screen is set to a high value. The higher the reporting threshold is, the lower the sensitivity to an operation the touch screen is. When a human wearing gloves performs an operation on an electronic device having a touch screen (such as, a mobile phone) in winter, due to the gloves, the distance between the finger and the touch screen is increased and the contact area between the finger and the touch screen is reduced, such that the capacitance of the coupling capacity is small and the signal of current flowing through the contact is weak. If the strength of the signal of current flowing through the contact is below the reporting threshold, the touch screen cannot respond to the operation issued by the human wearing gloves, thus the glove mode is required to be started to improve the sensitivity of the touch screen.

It should be noted that, step 301 is optional.

In step 302, the processor acquires an ambient temperature of the electronic device.

Alternatively, step 302 may be replaced with step S202A.

In step 202A, the processor acquires the ambient temperature via a temperature sensor disposed in the electronic device.

That is, the processor acquires the ambient temperature directly via the temperature sensor disposed in the electronic device.

Alternatively, step 302 may be replaced with sub-steps 302B and 302C.

In step 302B, the processor acquires a geographical position of the electronic device.

The method of acquiring the geographical position of the electronic device includes: acquiring the geographical position of the electronic device by locating the electronic device with the GPS disposed in the electronic device.

In step 302C, the processor acquires a temperature corresponding to the geographical position from a server as the ambient temperature.

The server may be a server providing real-time temperature in respective area, such as, a background server applied for weather forecast.

After acquiring the ambient temperature of the electronic device, the processer sends the ambient temperature to a touch IC.

In step 303, a current reporting threshold of the touch screen is maintained.

In step 304, the touch IC queries the reporting threshold corresponding to the ambient temperature.

Alternatively, step 304 includes sub-steps 304A and 304B.

In step 304A, the touch IC queries a temperature range to which the ambient temperature belongs.

The touch IC queries the temperature range to which the acquired ambient temperature belongs, and may conclude the thickness range of gloves used by the native according to the temperature range.

In step 304B, the touch IC queries the reporting threshold corresponding to the temperature range from a predetermined correspondence.

The predetermined correspondence may be a correspondence between at least one temperature range and the reporting threshold.

The touch IC prestores a correspondence between a temperature range and a threshold. Since various temperature ranges correspond respectively to various thicknesses of gloves likely to be worn, various temperature ranges correspond respectively to various reporting thresholds. Each reporting threshold may be derived according to the thickness of glove used by the user in some temperature range, the derivation may be performed by the developer via experiments in advance.

The correspondence may represent that one temperature range corresponds to a given predetermined reporting threshold. Alternatively, many temperature ranges may correspond to one reporting threshold. The presorted correspondence between the temperature range and the reporting threshold may be indicated as follows.

| temperature range | reporting threshold |
|---|---|
| -30°C∼-11°C | A |
| -10°C∼-1°C | B |
| 0°C∼10°C | C |
| 11°C∼30°C | D |

In step 305, the touch IC sets the queried reporting threshold as the reporting threshold of the touch screen.

For example, if the current temperature is -1°C, the processor queries the reporting threshold B, and sends the setting instruction to the touch IC, the setting instruction is configured to instruct the touch IC to set the current reporting threshold to the reporting threshold B.

In conclusion, with the method for setting a threshold, by acquiring the ambient temperature of the electronic device, querying the reporting threshold corresponding to the ambient temperature, and setting the reporting threshold acquired as the reporting threshold of the touch screen in the electronic device, the problem in the related art that the threshold is required to be set by the user manually, the operations are complex, there is less option for the threshold and the adaptability to the thickness of glove is limited is solved, and the effect of automatically setting the reporting threshold of the touch screen to a reasonable value according to the ambient temperature, reducing the operations set by the user and widely adapting to the thickness of glove may be achieved.

The following device embodiments of the present disclosure may be used to perform the method embodiments of the present disclosure. For details not disclosed in the device embodiments of the present disclosure, reference is made to the method embodiments of the present disclosure.

Fig. 4 is a block diagram of an apparatus for setting a threshold according to an example embodiment. As shown in Fig. 4, the apparatus for setting a threshold includes, but is not limited to an acquiring module 401, a querying module 402 and a setting module 403.

The acquiring module 401 is configured to acquire an ambient temperature of an electronic device.

The querying module 402 is configured to query a reporting threshold corresponding to the ambient temperature.

The setting module 403 is configured to set the reporting threshold queried as a reporting threshold of a touch screen in the electronic device.

In conclusion, with the apparatus for setting a threshold, by acquiring the ambient temperature of the electronic device, querying the reporting threshold corresponding to the ambient temperature, and setting the reporting threshold acquired as the reporting threshold of the touch screen in the electronic device, the problem in the related art that the threshold is required to be set by the user manually, the operations are complex, there is less option for the threshold and the adaptability to the thickness of glove is limited is solved, and the effect of automatically setting the reporting threshold of the touch screen to a reasonable value according to the ambient temperature, reducing the operations set by the user and widely adapting to the thickness of glove may be achieved.

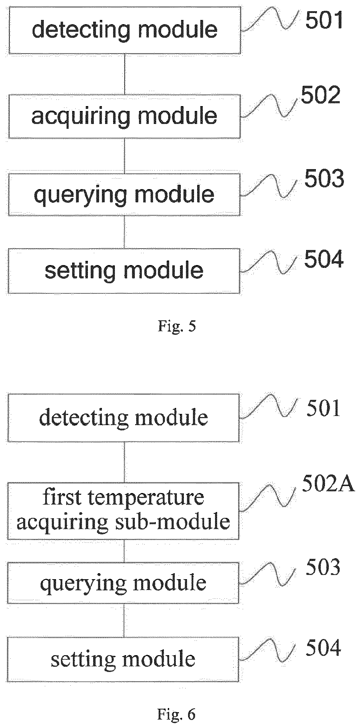

Fig. 5 is a block diagram of an apparatus for setting a threshold according to another example embodiment. As shown in Fig. 5, the apparatus for setting a threshold includes, but is not limited to a detecting module 501, an acquiring module 502, a querying module 503 and a setting module 504.

The detecting module 501 is configured to detect whether a glove touch mode is started.

It should be noted that, the detecting module 501 is an optional module.

The acquiring module 502 is configured to acquire an ambient temperature of an electronic device.

Alternatively, as shown in Fig. 6, the acquiring module 502 may be replaced with a first temperature acquiring sub-module 502A.

The first temperature acquiring sub-module 502A is configured to acquire the ambient temperature by a temperature sensor disposed in the electronic device.

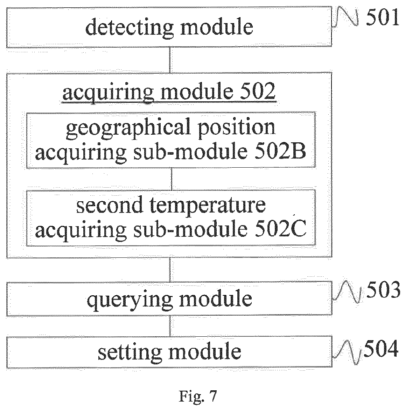

Alternatively, as shown in Fig. 7, the acquiring module 502 may be replaced with a geographical position acquiring sub-module 502B and a second temperature acquiring sub-module 502C.

The geographical position acquiring sub-module 502B is configured to acquire a geographical position of the electronic device.

The second temperature acquiring sub-module 502C is configured to acquire a temperature corresponding to the geographical position from a server as the ambient temperature.

The querying module 503 is configured to query a reporting threshold corresponding to the ambient temperature.

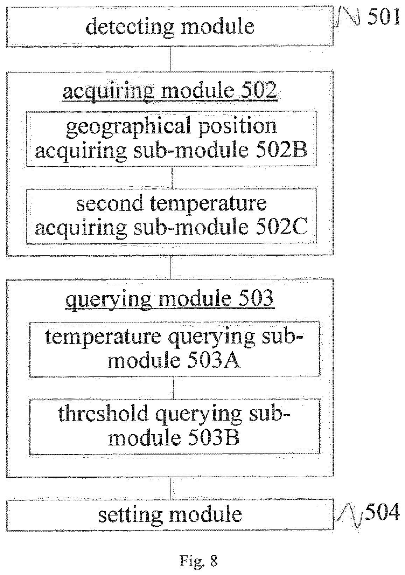

Alternatively, as shown in Fig. 8, the querying module includes a temperature querying sub-module 503A and a threshold querying sub-module 503B.

The temperature querying sub-module 503A is configured to query a temperature range to which the ambient temperature belongs.

The temperature querying sub-module 503B is configured to query a reporting threshold corresponding to the temperature range from a predetermined correspondence, in which the correspondence is a correspondence between at least one temperature range and the reporting threshold.

The setting module 504 is configured to set the reporting threshold queried as a reporting threshold of a touch screen in the electronic device.

Alternatively, the setting module 504 is configured to send a setting instruction to a touch IC by a processor of a mobile terminal if the reporting threshold is queried by the processor, in which the setting instruction is configured to instruct the touch IC to set the reporting threshold queried as the reporting threshold of the touch screen.

Or the setting module 504 is configured to set the reporting threshold queried as the reporting threshold of the touch screen if the reporting threshold is queried by the touch IC.

In conclusion, with the apparatus for setting a threshold, by acquiring the ambient temperature of the electronic device, querying the reporting threshold corresponding to the ambient temperature, and setting the reporting threshold acquired as the reporting threshold of the touch screen in the electronic device, the problem in the related art that the threshold is required to be set by the user manually, the operations are complex, there is less option for the threshold and the adaptability to the thickness of glove is limited is solved, and the effect of automatically setting the reporting threshold of the touch screen to a reasonable value according to the ambient temperature, reducing the operations set by the user and widely adapting to the thickness of glove may be achieved.

With respect to the apparatus in the above embodiments, the specific manners for performing operations for individual modules therein have been described in detail in the embodiments regarding the method, which will not be elaborated herein.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

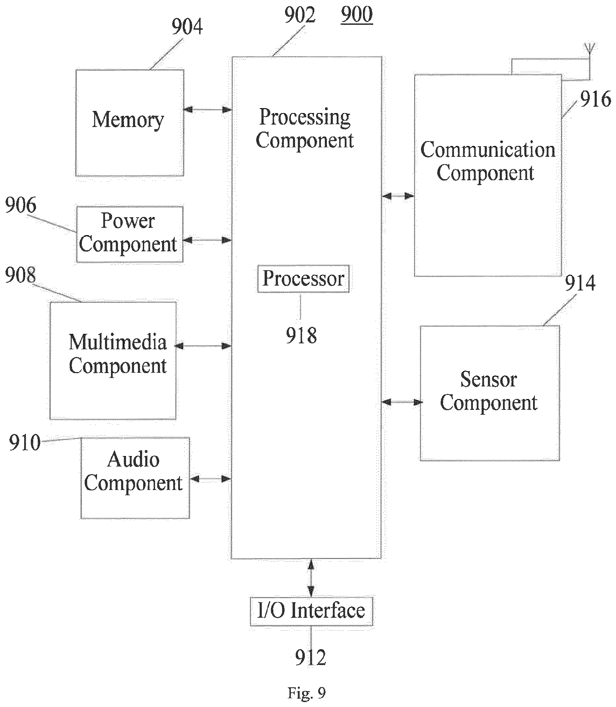

Fig. 9 is a block diagram of a device for setting a threshold according to an example embodiment. For example, the device 900 may be an electronic device having a capacitive touch screen, such as a smart phone, a panel computer, an electronic book reader, a personal digital assistant, a laptop portable computer, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deccleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as a memory 904 including instructions, the instructions may be executable by the processor 918 in the device 900, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of the device 900, causes the device 900 to perform a method for setting a threshold.
The processor 920 is configured to:
acquiring an ambient temperature of an electronic device;
querying a reporting threshold corresponding to the ambient temperature; and
setting the reporting threshold queried as a reporting threshold of a touch screen in the electronic device.

## Claims

1. A method for setting a reporting threshold for a touch screen of an electronic device, the method comprising:
acquiring an ambient temperature of the electronic device (101, 202);
querying a reporting threshold corresponding to the ambient temperature (102, 204); and
setting the reporting threshold queried as a reporting threshold of the touch screen of the electronic device (103);
**characterised in that**
querying a reporting threshold corresponding to the ambient temperature (102, 204), comprises:
querying a temperature range to which the ambient temperature belongs (204A, 304A); and
querying a reporting threshold corresponding to the temperature range from a predetermined correspondence (204B, 304B), wherein the predetermined correspondence is a correspondence between a plurality of temperature ranges and reporting thresholds, the temperature ranges corresponding respectively to various thicknesses of gloves likely to be worn and the reporting thresholds being derived according to the thickness of glove used by a user in the temperature range.

2. The method according to claim 1, wherein acquiring an ambient temperature of an electronic device (101, 202), comprises:
acquiring the ambient temperature by a temperature sensor disposed in the electronic device (202A).

3. The method according to claim 1, wherein acquiring an ambient temperature of an electronic device (101, 202), comprises:
acquiring a geographical position of the electronic device (202B, 302B), and acquiring a temperature corresponding to the geographical position from a server as the ambient temperature (202C, 302C).

4. The method according to any one of claims 1-3, wherein setting the reporting threshold queried as a reporting threshold of the touch screen of the electronic device (103), comprises:
sending a setting instruction to a touch integrated circuit by a processor of the electronic device if the reporting threshold is queried by the processor (205), wherein the setting instruction is configured to instruct the touch integrated circuit to set the reporting threshold queried as the reporting threshold of the touch screen.

5. The method according to any one of claims 1-3, wherein setting the reporting threshold queried as a reporting threshold of the touch screen of the electronic device (103), comprises:
setting the reporting threshold queried as the reporting threshold of the touch screen by a touch integrated circuit if the reporting threshold is queried by the touch integrated circuit (305).

6. The method according to any one of claims 1-5, further comprising:
detecting whether a glove touch mode is started (201, 301); and
performing an act of acquiring the ambient temperature of the electronic device (101, 202), if the glove touch mode is started.

7. An apparatus for setting a threshold, comprising:
an acquiring module (401, 502), configured to acquire an ambient temperature of an electronic device;
a querying module (402, 503), configured to query a reporting threshold corresponding to the ambient temperature; and
a setting module (403, 504), configured to set the reporting threshold queried as a reporting threshold of a touch screen of the electronic device;
**characterised in that** the querying module (402, 503) comprises:
a temperature querying sub-module (503A), configured to query a temperature range to which the ambient temperature belongs; and
a reporting threshold querying sub-module (503B), configured to query a reporting threshold corresponding to the temperature range from a predetermined correspondence, wherein the predetermined correspondence is a correspondence between a plurality of temperature ranges and reporting thresholds, the temperature ranges corresponding respectively to various thicknesses of gloves likely to be worn and the reporting thresholds being derived according to the thickness of glove used by a user in the temperature range.

8. The apparatus according to claim 7, wherein the acquiring module (401, 502) comprises a first temperature acquiring sub-module (502A) or comprises a geographical position acquiring sub-module (502B) and a second temperature acquiring sub-module (502C); wherein
the first temperature acquiring sub-module (502A) is configured to acquire the ambient temperature by a temperature sensor disposed in the electronic device;
the geographical position acquiring sub-module (502B) is configured to acquire a geographical position of the electronic device; and
the second temperature acquiring sub-module (502C) is configured to acquire a temperature corresponding to the geographical position from a server as the ambient temperature.

9. The apparatus according to any one of claims 7 or 8, wherein
the setting module (403, 504) is configured to send a setting instruction to a touch integrated circuit by a processor of the electronic device if the reporting threshold is queried by the processor, wherein the setting instruction is configured to instruct the touch integrated circuit to set the reporting threshold queried as the reporting threshold of the touch screen;
or
the setting module (403, 504) is configured to set the reporting threshold queried as the reporting threshold of the touch screen by a touch integrated circuit if the reporting threshold is queried by the touch integrated circuit.

10. The apparatus according to any one of claims 7-9, further comprising:
a detecting module (501), configured to detect whether a glove touch mode is started; wherein
the acquiring module (401, 502) is further configured to perform an act of acquiring the ambient temperature of the electronic device, if the glove touch mode is started.

11. A device for setting a threshold, comprising:
a processor; and
a memory for storing instructions executable by the processor;
wherein the processor is configured to perform the method for setting a threshold according to any one of claims 1-6.

12. A non-transitory computer-readable storage medium having stored therein instructions that, when executed by a processor of a device, causes the device to perform the method for setting a threshold according to any one of claims 1-6.

13. A computer program comprising instructions that when executed cause a computer to perform the steps of any of claims 1 to 6.

## Patentansprüche

1. Verfahren zum Einstellen einer Meldeschwelle für einen Touchscreen eines elektronischen Geräts, wobei das Verfahren Folgendes beinhaltet:
Erfassen einer Umgebungstemperatur des elektronischen Geräts (101, 202);
Abfragen einer Meldeschwelle entsprechend der Umgebungstemperatur (102, 204); und
Einstellen der abgefragten Meldeschwelle als Meldeschwelle des Touchscreen des elektronischen Geräts (103) ;
**dadurch gekennzeichnet, dass**
das Abfragen einer Meldeschwelle entsprechend der Umgebungstemperatur (102, 204) Folgendes beinhaltet:
Abfragen eines Temperaturbereichs, zu dem die Umgebungstemperatur (204A, 304A) gehört; und
Abfragen einer Meldeschwelle entsprechend dem Temperaturbereich von einer entsprechenden Korrespondenz (204B, 304B), wobei die vorbestimmte Korrespondenz eine Korrespondenz zwischen mehreren Temperaturbereichen und Meldeschwellen ist, wobei die Temperaturbereiche jeweils verschiedenen Dicken von wahrscheinlich getragenen Handschuhen entsprechen und die Meldeschwellen gemäß der Dicke von von einem Benutzer in dem Temperaturbereich getragenen Handschuhen abgeleitet werden.

2. Verfahren nach Anspruch 1, wobei das Erfassen einer Umgebungstemperatur eines elektronischen Geräts (101, 202) Folgendes beinhaltet:
Erfassen der Umgebungstemperatur mit einem in dem elektronischen Gerät (202A) angeordneten Temperatursensor.

3. Verfahren nach Anspruch 1, wobei das Erfassen einer Umgebungstemperatur eines elektronischen Geräts (101, 202) Folgendes beinhaltet:
Erfassen einer geografischen Position des elektronischen Geräts (202B, 302B) und Erfassen einer Temperatur entsprechend der geografischen Position von einem Sensor als Umgebungstemperatur (202C, 302C).

4. Verfahren nach einem der Ansprüche 1-3, wobei das Einstellen der abgefragten Meldeschwelle als Meldeschwelle des Touchscreen des elektronischen Geräts (103) Folgendes beinhaltet:
Senden eines Einstellbefehls zu einer integrierten Berührungsschaltung von einem Prozessor des elektronischen Geräts, wenn die Meldeschwelle vom Prozessor (205) abgefragt wird, wobei der Einstellbefehl zum Anweisen der integrierten Berührungsschaltung zum Einstellen der abgefragten Meldeschwelle des Touchscreen als Meldeschwelle konfiguriert ist.

5. Verfahren nach einem der Ansprüche 1-3, wobei das Einstellen der abgefragten Meldeschwelle als Meldeschwelle des Touchscreen des elektronischen Geräts (103) Folgendes beinhaltet:
Einstellen der abgefragten Meldeschwelle als Meldeschwelle des Touchscreen durch eine integrierte Berührungsschaltung, wenn die Meldeschwelle von der integrierten Berührungsschaltung (305) abgefragt wird.

6. Verfahren nach einem der Ansprüche 1-5, das ferner Folgendes beinhaltet:
Erkennen, ob ein Handschuhberührungsmodus gestartet (201, 301) ist; und
Durchführen einer Tätigkeit des Erfassens der Umgebungstemperatur des elektronischen Geräts (101, 202), wenn der Handschuhberührungsmodus gestartet ist.

7. Vorrichtung zum Einstellen einer Schwelle, die Folgendes umfasst:
ein Erfassungsmodul (401, 502), konfiguriert zum Erfassen einer Umgebungstemperatur eines elektronischen Geräts;
ein Abfragemodul (402, 503), konfiguriert zum Abfragen einer Meldeschwelle entsprechend der Umgebungstemperatur; und
ein Einstellmodul (403, 504), konfiguriert zum Einstellen der abgefragten Meldeschwelle als Meldeschwelle eines Touchscreen des elektronischen Geräts;
**dadurch gekennzeichnet, dass** das Abfragemodul (402, 503) Folgendes umfasst:
ein Temperaturabfrage-Submodul (503A), konfiguriert zum Abfragen eines Temperaturbereichs, zu dem die Umgebungstemperatur gehört; und
ein Meldeschwellenabfrage-Submodul (503B), konfiguriert zum Abfragen einer Meldeschwelle entsprechend dem Temperaturbereich von einer vorbestimmten Korrespondenz, wobei die vorbestimmte Korrespondenz eine Korrespondenz zwischen mehreren Temperaturbereichen und Meldeschwellen ist, wobei die Temperaturbereiche jeweils verschiedenen Dicken von wahrscheinlich getragenen Handschuhen entsprechen und die Meldeschwellen gemäß der Dicke von von einem Benutzer in dem Temperaturbereich getragenen Handschuhen abgeleitet sind.

8. Vorrichtung nach Anspruch 7, wobei das Erfassungsmodul (401, 502) ein erstes Temperaturerfassungs-Submodul (502A) umfasst oder ein Geografische-Position-Erfassungs-Submodul (502B) und ein zweites Temperatur-Erfassungs-Submodul (502C) umfasst; wobei
das erste Temperaturerfassungs-Submodul (502A) zum Erfassen der Umgebungstemperatur mit einem in dem elektronischen Gerät angeordneten Temperatursensor konfiguriert ist;
das Geografische-Position-Erfassungs-Submodul (502B) zum Erfassen einer geografischen Position des elektronischen Geräts konfiguriert ist; und
das zweite Temperaturerfassungs-Submodul (502C) zum Erfassen einer Temperatur entsprechend der geografischen Position von einem Server als Umgebungstemperatur konfiguriert ist.

9. Vorrichtung nach Anspruch 7 oder 8, wobei
das Einstellmodul (403, 504) zum Senden eines Einstellbefehls zu einer integrierten Berührungsschaltung durch einen Prozessor des elektronischen Geräts konfiguriert ist, wenn die Meldeschwelle vom Prozessor abgefragt wird, wobei der Einstellbefehl zum Anweisen der integrierten Berührungsschaltung zum Einstellen der abgefragten Meldeschwelle als Meldeschwelle des Touchscreen konfiguriert ist;
oder
das Einstellmodul (403, 504) zum Einstellen der abgefragten Meldeschwelle als Meldeschwelle des Touchscreen durch eine integrierte Berührungsschaltung konfiguriert ist, wenn die Meldeschwelle von der integrierten Berührungsschaltung abgefragt wird.

10. Vorrichtung nach einem der Ansprüche 7-9, die ferner Folgendes umfasst:
ein Erkennungsmodul (501), konfiguriert zum Erkennen, ob ein Handschuhberührungsmodus gestartet ist; wobei
das Erfassungsmodul (401, 502) ferner zum Durchführen einer Tätigkeit des Erfassens der Umgebungstemperatur des elektronischen Geräts konfiguriert ist, wenn der Handschuhberührungsmodus gestartet ist.

11. Gerät zum Einstellen einer Schwelle, das Folgendes umfasst:
einen Prozessor; und
einen Speicher zum Speichern von von dem Prozessor ausführbaren Befehlen;
wobei der Prozessor zum Durchführen des Verfahrens zum Einstellen einer Schwelle nach einem der Ansprüche 1-6 konfiguriert ist.

12. Nichtflüchtiges computerlesbares Speichermedium, auf dem Befehle gespeichert sind, die bei Ausführung durch einen Prozessor eines Geräts bewirken, dass das Gerät das Verfahren zum Einstellen einer Schwelle nach einem der Ansprüche 1-6 durchführt.

13. Computerprogramm, das Befehle umfasst, die bei Ausführung bewirken, dass ein Computer die Schritte nach einem der Ansprüche 1 bis 6 durchführt.

## Revendications

1. Procédé de réglage d'un seuil de déclaration d'un écran tactile d'un dispositif électronique, le procédé comprenant :
l'acquisition d'une température ambiante du dispositif électronique (101, 202) ;
l'interrogation d'un seuil de déclaration correspondant à la température ambiante (102, 204) ; et
le réglage du seuil de déclaration interrogé comme seuil de déclaration de l'écran tactile du dispositif électronique (103) ;
**caractérisé en ce que**
l'interrogation d'un seuil de déclaration correspondant à la température ambiante (102, 204), comprend :
l'interrogation d'une plage de températures à laquelle appartient la température ambiante (204A, 304A) ; et
l'interrogation d'un seuil de déclaration correspondant à la plage de températures d'une correspondance prédéterminée (204B, 304B), dans lequel la correspondance prédéterminée est une correspondance entre une pluralité de plages de températures et des seuils de déclaration, les plages de températures correspondant respectivement à diverses épaisseurs de gants susceptibles d'être portés et les seuils de déclaration étant dérivés conformément à l'épaisseur de gant utilisée par un utilisateur dans la plage de températures.

2. Procédé selon la revendication 1, dans lequel l'acquisition d'une température ambiante d'un dispositif électronique (101, 202) comprend :
l'acquisition de la température ambiante par un capteur de température disposé dans le dispositif électronique (202A).

3. Procédé selon la revendication 1, dans lequel l'acquisition d'une température ambiante d'un dispositif électronique (101, 202) comprend :
l'acquisition d'une position géographique du dispositif électronique (202B, 302B), et l'acquisition d'une température correspondant à la position géographique auprès d'un serveur comme température ambiante (202C, 302C).

4. Procédé selon l'une quelconque des revendications 1 à 3, dans lequel le réglage du seuil de déclaration interrogé comme seuil de déclaration de l'écran tactile du dispositif électronique (103), comprend :
l'envoi d'une instruction de réglage à un circuit intégré de toucher par un processeur du dispositif électronique si le seuil de déclaration est interrogé par le processeur (205), dans lequel l'instruction de réglage est configurée pour ordonner au circuit intégré de toucher de régler le seuil de déclaration interrogé comme seuil de déclaration de l'écran tactile.

5. Procédé selon l'une quelconque des revendications 1 à 3, dans lequel le réglage du seuil de déclaration interrogé comme seuil de déclaration de l'écran tactile du dispositif électronique (103), comprend :
le réglage du seuil de déclaration interrogé comme seuil de déclaration de l'écran tactile par un circuit intégré de toucher si le seuil de déclaration est interrogé par le circuit intégré de toucher (305).

6. Procédé selon l'une quelconque des revendications 1 à 5, comprenant en outre :
la détection qu'un mode de toucher par un gant est lancé ou non (201, 301) ; et
l'exécution d'une action d'acquisition de la température ambiante du dispositif électronique (101, 202), si le mode de toucher par un gant est lancé.

7. Appareil de réglage d'un seuil, comprenant :
un module d'acquisition (401, 502), configuré pour acquérir une température ambiante d'un dispositif électronique ;
un module d'interrogation (402, 503), configuré pour interroger un seuil de déclaration correspondant à la température ambiante ; et
un module de réglage (403, 504), configuré pour régler le seuil de déclaration interrogé comme seuil de déclaration d'un écran tactile du dispositif électronique ;
**caractérisé en ce que** le module d'interrogation (402, 503) comprend :
un sous-module d'interrogation de température (503A), configuré pour interroger une plage de températures à laquelle appartient la température ambiante ; et
un sous-module d'interrogation de seuil de déclaration (503B), configuré pour interroger un seuil de déclaration correspondant à la plage de températures d'une correspondance prédéterminée, dans lequel la correspondance prédéterminée est une correspondance entre une pluralité de plages de températures et des seuils de déclaration, la plage de températures correspondant respectivement à diverses épaisseurs de gants susceptibles d'être portés et les seuils de déclaration étant dérivés conformément à l'épaisseur de gant utilisée par un utilisateur dans la plage de températures.

8. Appareil selon la revendication 7, dans lequel le module d'acquisition (401, 502) comprend un premier sous-module d'acquisition de température (502A) ou comprend un sous-module d'acquisition de position géographique (502B) et un second sous-module d'acquisition de température (502C) ; dans lequel
le premier sous-module d'acquisition de température (502A) est configuré pour acquérir la température ambiante par un capteur de température disposé dans le dispositif électronique ;
le sous-module d'acquisition de position géographique (502B) est configuré pour acquérir une position géographique du dispositif électronique ; et
le second sous-module d'acquisition de température (502C) est configuré pour acquérir une température correspondant à la position géographique depuis un serveur comme température ambiante.

9. Appareil selon l'une quelconque des revendications 7 ou 8, dans lequel
le module de réglage (403, 504) est configuré pour envoyer une instruction de réglage à un circuit intégré de toucher par un processeur du dispositif électronique si le seuil de déclaration est interrogé par le processeur, dans lequel l'instruction de réglage est configurée pour ordonner au circuit intégré de toucher de régler le seuil de déclaration interrogé comme seuil de déclaration de l'écran tactile ;
ou
le module de réglage (403, 504) est configuré pour régler le seuil de déclaration interrogé comme seuil de déclaration de l'écran tactile par un circuit intégré de toucher si le seuil de déclaration est interrogé par le circuit intégré de toucher.

10. Appareil selon l'une quelconque des revendications 7 à 9, comprenant en outre :
un module de détection (501), configuré pour détecter qu'un mode de toucher par un gant est lancé ou non ; dans lequel
le module d'acquisition (401, 502) est configuré en outre pour exécuter une action d'acquisition de la température ambiante du dispositif électronique, si le mode de toucher par un gant est lancé.

11. Dispositif de réglage d'un seuil, comprenant :
un processeur ; et
une mémoire pour mémoriser des instructions exécutables par le processeur ;
dans lequel le processeur est configuré pour exécuter le procédé de réglage d'un seuil selon l'une quelconque des revendications 1 à 6.

12. Support de mémorisation non transitoire lisible par ordinateur sur lequel sont mémorisées des instructions qui, à leur exécution par un processeur d'un dispositif, amènent le dispositif à exécuter le procédé de réglage d'un seuil selon l'une quelconque des revendications 1 à 6.

13. Programme informatique comprenant des instructions qui, à leur exécution, amènent un ordinateur à exécuter les étapes selon l'une quelconque des revendications 1 à 6.
